# EUROPÄISCHE PATENTSCHRIFT

(11) **EP 1 057 997 B1**
(45) Veröffentlichungstag und Bekanntmachung des Hinweises auf die Patenterteilung: **14.01.2004**
(21) Anmeldenummer: 00109832.6
(22) Anmeldetag: 10.05.2000
(51) Int. Cl.: F02M 1/16, H01M 8/06

(54) **Brennkraftmaschine mit einer Brennstoffzelle als Strom-/Spannungsquelle**
Internal combustion engine with fuel cell as current/voltage source
Moteur à combustion interne avec une pile à combustible comme source de tension/courant

(30) Priorität: 29.05.1999 DE 19924778
(43) Veröffentlichungstag der Anmeldung: 06.12.2000
(73) Patentinhaber: Bayerische Motoren Werke Aktiengesellschaft, 80809 München (DE)
(72) Erfinder: Ringler, Jürgen, 86438 Kissing (DE); Fischer, Gregor, 85737 Ismaning (DE)

(56) Entgegenhaltungen:
- EP-A- 0 751 045
- WO-A-98/58874
- US-A- 5 899 175
- "GASOLINE-REFORMING FUEL CELL" AUTOMOTIVE ENGINEERING,US,SOCIETY OF AUTOMOTIVE ENGINEERS. WARRENDALE, Bd. 105, Nr. 2, 1. Februar 1997 (1997-02-01), Seiten 151-152, XP000682325 ISSN: 0098-2571

## Beschreibung

Die Erfindung bezieht sich nach dem Oberbegriff des Patentanspruches 1 auf eine Brennkraftmaschine mit einer Brennstoffzelle als Strom-/Spannungsquelle, wobei die Brennstoffzelle mit einem gasförmigen Wasserstoff liefernden Reformer in Verbindung steht, der den Wasserstoff aus einem dem Betrieb der Brennkraftmaschine dienenden, bevorratet gehaltenen Flüssigkraftstoff reformiert.

Bekanntlich werden zur Bereitstellung des notwendigen Wasserstoffes für Brennstoffzellen Reformer-Systeme eingesetzt, in denen primäre Alkohole (z.B. Methanol, Ethanol, etc.) oder Kohlenwasserstoffe verschiedener Kettenlänge und Struktur (z.B. Methan, n-Heptan, Isooctan, etc.) zu Wasserstoff und Kohlenmonoxid umgesetzt werden. Dabei wird mittels Katalysatoren die Reformierungs-Temperatur abgesenkt.

Aufgrund der bestehenden Infrastruktur für Kraftfahrzeug-Kraftstoffe wird wegen deren hoher Energiedichte sowie den hohen Herstellungswirkungsgraden zunehmend angestrebt, insbesondere aus Benzin- oder Diesel-Kraftstoffen durch Reformierung an Bord eines Fahrzeuges den zum Betrieb einer Brennstoffzelle notwendigen Wasserstoff zu gewinnen. Hinsichtlich dieser Wasserstoff-Gewinnung ist beispielsweise auf die PCT-Anmeldung WO 98/58874 verwiesen.

Der Erfindung liegt die Aufgabe zugrunde, für eine Wasserstoff-Erzeugung an Bord eines Kraftfahrzeuges mit einer gattungsgemäßen Antriebseinheit eine Anordnung aufzuzeigen, mittels der dem Reformer aus dem bordgestützten Brennkraftmaschinen-Kraftstoff ein für eine rasch einsetzende Reformierung geeigneter Betriebsstoff zur Verfügung gestellt ist.

Diese Aufgabe ist mit dem Patentanspruch 1 dadurch gelöst, daß der Reformer zum Betrieb mit einem in einer mit der Kraftstoffbevorratung verbundenen Vorrichtung erzeugten Kondensat aus Dämpfen leichtsiedender Bestandteile des Brennkraftmaschinen-Kraftstoffes über eine Zuleitung versorgbar ist.

Mit der erfindungsgemäßen Zuführung eines Kondensates aus leichtsiedenden Kraftstoff-Bestandteilen zu dem Reformer kann dieser in vorteilhafter Weise bereits in der Warmlaufphase der Brennkraftmaschine aus dem Kondensat-Betriebsstoff reformierten Wasserstoff an die Brennstoffzelle abgeben. Dies ist besonders vorteilhaft für eine Strom und Spannung in das Bordnetz liefernde, als Hilfseinrichtung ausgebildete Brennstoffzelle.

Eine bevorzugte Ausgestaltung der Erfindung kennzeichnet sich durch einen Kraftstoff-Vorratsbehälter, aus dem der Brennkraftmaschinen-Kraftstoff über eine Vorlaufleitung pumpengefördert einem Gemischbildungssystem zugeführt und überschüssiger Kraftstoff druckgesteuert über eine Rücklaufleitung abgeführt ist, wobei in der Vorrichtung einem stromauf eines Druckhalteventils aus der Rücklaufventil abgezweigten Brennkraftmaschinen-Kraftstoff über einen Wärmetauscher Verdampfungswärme zugeführt ist, und der erwärmte bzw. erhitzte Brennkraftmaschinen-Kraftstoff über ein Regulierventil einem Dampfabscheider zuströmt, aus dem die Dämpfe leichtsiedender Kraftstoffbestandteile mittels eines Verdichters abgesaugt und einem Kondensator zugeführt sind, der mit einem Tank der Vorrichtung kondensatführend verbunden ist.

Mit dieser erfindungsgemäßen Anordnung kann in vorteilhafter Weise ein Reformer-Kraftstoff mit hohem Anteil an leichtflüchtigen Komponenten des Brennkraftmaschinen-Kraftstoffes an Bord des Fahrzeuges erzeugt werden, wobei mit der Verwendung hierfür eines an Bord mitgeführten Brennkraftmaschinen-Kraftstoffes eine zusätzliche Infrastruktur entfällt und für den Betreiber des Fahrzeuges in vorteilhafter Weise nur eine Kraftstoffart zu tanken ist. Weiter sind für den erfindungsgemäß versorgten Reformer vereinfachte Reformierungsbedingungen sowie eine verringerte Kohlenstoffbildung als Vorteile zu nennen.

Weitere vorteilhafte Ausgestaltungen der erfindungsgemäßen Anordnung sind in weiteren Unteransprüchen beschrieben.

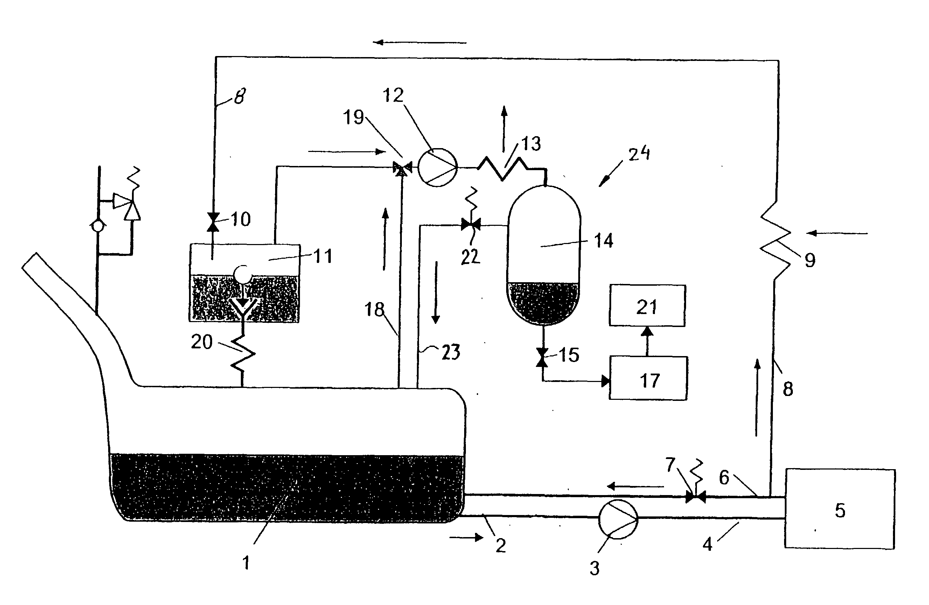

Die Erfindung ist anhand eines in der Zeichnung dargestellten Schema-Bildes beschrieben.

Bei einer Brennkraftmaschine 5 mit einer Brennstoffzelle 21 als Strom-/Spannungsquelle steht die Brennstoffzelle 21 mit einem gasförmigen Wasserstoff liefernden Reformer 17 in Verbindung, der den Wasserstoff aus einem dem Betrieb der Brennkraftmaschine 5 dienenden, bevorratet gehaltenen Flüssigkraftstoff reformiert.

Um dem Reformer 17 aus dem bordgestützten Brennkraftmaschinen-Kraftstoff einen für eine rasch einsetzende Reformierung geeigneten Betriebsstoff zur Verfügung zu stellen, wird erfindungsgemäß vorgeschlagen, daß der Reformer 17 zum Betrieb mit einem in einer mit der Kraftstoffbevorratung 1 verbundenen Vorrichtung 24 erzeugten Kondensat aus Dämpfen leichtsiedender Bestandteile des Brennkraftmaschinen-Kraftstoffes über eine Zuleitung 15 versorgbar ist.

Die für die Brennkraftmaschine 5 vorgesehene Kraftstoffbevorratung umfaßt einen Kraftstoff-Vorratsbehälter 1, aus dem der Brennkraftmaschinen-Kraftstoff über eine Vorlaufleitung 2 und eine Pumpe 3 sowie eine Druckleitung 4 einem nicht gezeigten Gemischbildungssystem der Brennkraftmaschine 5 zugeführt ist. Überschüssiger Kraftstoff ist aus dem Gemischbildungssystem druckgesteuert über eine Rücklaufleitung 6 abgeführt.

Zur Erzeugung eines Kraftstoff-Kondensates in der Vorrichtung 24 ist stromauf eines Druckhalteventils 7 in der Rücklaufleitung 6 mittels einer abzweigenden Leitung 8 Brennkraftmaschinen-Kraftstoff entnommen, dem über einen Wärmetauscher 9 Verdampfungswärme zugeführt ist. Anschließend strömt der erwärmte bzw. erhitzte Brennkraftmaschinen-Kraftstoff über ein Regulierventil 10 in der Leitung 8 einem Dampfabscheider 11 zu, aus dem die Dämpfe leichtsiedender Kraftstoffbestandteile mittels eines Verdichters 12 abgesaugt und einem Kondensator 13 zugeführt sind, der mit einem Tank 14 der Vorrichtung 24 kondensatführend verbunden ist.

Ein im Kondensat-Tank 14 der Vorrichtung 24 anstehender Überdruck kann über eine mit einem Druckventil 22 ausgerüstete Abblaseleitung 23 in den Kraftstoff-Vorratsbehälter 1 abgebaut werden.

Andererseits kann der Kondensat-Tank 14 zusätzlich mit Kraftstoff-Dämpfen dadurch aufgeladen werden, daß der Kraftstoff-Vorratsbehälter 1 von einem Hochpunkt aus über eine ventilgesteuerte Abströmleitung 18 mit dem Verdichter 12 saugseitig verbunden ist.

Weiter ist aus der einzigen Figur ersichtlich, daß der im Dampfabscheider 11 gesammelte Kraftstoff aus schwerflüchtigen bzw. hochsiedenden Bestandteilen über einen kraftstoffkühlenden Wärmetauscher 20 in den Kraftstoff-Vorratsbehälter 1 ventilgesteuert zurückgeführt ist.

Schließlich kennzeichnet sich die Erfindung insbesondere durch die Verwendung an Bord eines nicht dargestellten Fahrzeuges, wobei das Kondensat während üblicher Betriebsphasen der Brennkraftmaschine 5 unter Verwendung von Maschinen-Abwärme erzeugt und im Tank 14 zwischengespeichert ist für den Reformer 17, der im Anschluß an einen Start der Brennkraftmaschine 5 in Wirkverbindung steht mit einer als Hilfseinrichtung gestalteten Brennstoffzelle 21 zur Versorgung des Bordnetzes des Kraftfahrzeuges einschließlich der Brennkraftmaschine 5.

## Patentansprüche

1. Brennkraftmaschine mit einer Brennstoffzelle als Strom-/Spannungsquelle,
- wobei die Brennstoffzelle (21) mit einem gasförmigen Wasserstoff liefernden Reformer (17) in Verbindung steht, der
- den Wasserstoff aus einem dem Betrieb der Brennkraftmaschine (5) dienenden, bevorratet gehaltenen Flüssigkraftstoff reformiert,
**dadurch gekennzeichnet,**
- **daß** der Reformer (17) zum Betrieb mit einem in einer mit der Kraftstoffbevorratung (1) verbundenen Vorrichtung (24) erzeugten Kondensat aus Dämpfen leichtsiedender Bestandteile des Brennkraftmaschinen-Kraftstoffes über eine Zuleitung (15) versorgbar ist.

2. Brennkraftmaschine nach Anspruch 1 mit einer Kraftstoffbevorratung, **gekennzeichnet durch**
- einen Kraftstoff-Vorratsbehälter (1), aus dem der Brennkraftmaschinen-Kraftstoff über eine Vorlaufleitung (2, 4) pumpengefördert einem Gemischbildungssystem zugeführt und überschüssiger Kraftstoff druckgesteuert über eine Rücklaufleitung (6) abgeführt ist, wobei
- in der Vorrichtung (24) einem stromauf eines Druckhalteventils (7) aus der Rücklaufleitung (6) abgezweigten Brennkraftmaschinen-Kraftstoff über einen Wärmetauscher (9) Verdampfungswärme zugeführt ist, und
- der erwärmte bzw. erhitzte Brennkraftmaschinen-Kraftstoff über ein Regulierventil (10) einem Dampfabscheider (11) zuströmt, aus dem
- die Dämpfe leichtsiedender Kraftstoffbestandteile mittels eines Verdichters (12) abgesaugt und einem Kondensator (13) zugeführt sind, der
- mit einem Tank (14) kondensatführend verbunden ist.

3. Brennkraftmaschine nach Anspruch 1 und 2, **dadurch gekennzeichnet, daß** der Kondensat-Tank (14) über eine mit einem Druckventil (22) ausgerüstete Abblaseleitung (23) mit dem Kraftstoff-Vorratsbehälter (1) in Verbindung steht.

4. Brennkraftmaschine nach einem der Ansprüche 2 und 3, **dadurch gekennzeichnet, daß** der Kraftstoff-Vorratsbehälter (1) von einem Hochpunkt aus über eine ventilgesteuerte Abströmleitung (18) mit dem Verdichter (12) saugseitig verbunden ist.

5. Brennkraftmaschine nach Anspruch 2, **dadurch gekennzeichnet, daß** der im Dampfabscheider (11) gesammelte Kraftstoff aus schwerflüchtigen bzw. hochsiedenden Bestandteilen über einen kraftstoffkühlenden Wärmetauscher (20) in den Kraftstoff-Vorratsbehälter (1) ventilgesteuert zurückgeführt ist.

6. Brennkraftmaschine nach einem der Ansprüche 1 bis 5, **gekennzeichnet durch**
- die Verwendung an Bord eines Kraftfahrzeuges, wobei
- das Kondensat mittels bordeigener Abwärme erzeugt und im Tank (14) zwischengespeichert ist für den Reformer (17), der
- in Wirkverbindung steht mit einer als Hilfseinrichtung gestalteten Brennstoffzelle (21) als Strom-/Spannungsquelle für das Bordnetz.

## Claims

1. An internal combustion engine with a current and voltage source in the form of a fuel cell,
- wherein the fuel cell (21) is connected to a reformer (17) which delivers gaseous hydrogen and
- reforms the hydrogen from a supply of liquid fuel for operating the engine (5),
**characterised in that**
- the reformer (17) is operated by supplying it through a feed line (15) with condensed vapours of low-boiling constituents of the engine fuel generated by a device (24) connected to the fuel supply (1).

2. An engine according to claim 1 with a fuel supply, **characterised by**
- a fuel tank (1) from which the engine fuel is pumped through an outflow line (2, 4) to a mixture-forming system and excess fuel is removed under pressure through a return line (6), wherein
- in the device (24), heat of evaporation is supplied via a heat exchanger (9) to engine fuel branched off the return line (6) upstream of a pressure-maintaining valve (7), and
- the heated engine fuel flows through a regulating valve (10) to a vapour separator (11), from which
- evaporated low-boiling fuel constituents are sucked by a compressor (12) and supplied to a condenser (13) which
- is connected to a tank (14) for conveying condensate.

3. An engine according to claims 1 and 2, **characterised in that** the condensate tank (14) is connected to the fuel tank (1) by a blow-off line (23) equipped with a pressure valve (22).

4. An engine according to claim 2 and 3, **characterised in that** the fuel tank (1) is connected from a high point via a valve-controlled outflow line (18) to the compressor (12) on the suction side.

5. An engine according to claim 2, **characterised in that** the fuel collected in the vapour separator (11) and consisting difficultly volatile or high-boiling constituents is returned under valve control to the fuel tank (1) via a fuel-cooling heat exchanger (20).

6. An engine according to any of claims 1 to 5, **characterised by**
- use on board a motor vehicle, wherein
- the condensate is produced by waste heat from the vehicle and temporarily stored in the tank (14) for the reformer (17), which
- is operatively connected to an auxiliary device in the form of a fuel cell (21) for supplying current and voltage to the vehicle power system.

## Revendications

1. Moteur à combustion interne avec pile à combustible comme source de courant/tension, dans lequel :
- la pile à combustible (21) est reliée à un reformeur (17) fournissant de l'hydrogène gazeux qui
- reforme l'hydrogène à partir d'un carburant liquéfié maintenu approvisionné servant au fonctionnement du moteur à combustion interne (5),
**caractérisé en ce que**
le reformeur (17) peut être approvisionné, pour le fonctionnement, par une conduite (15), en condensat produit dans un dispositif (24) relié à l'approvisionnement en carburant (1), constitué de vapeur de constituants à bas point d'ébullition du carburant du moteur à combustion interne.

2. Moteur à combustion interne selon la revendication 1 avec un approvisionnement en carburant,
**caractérisé par** :
- un réservoir d'approvisionnement en carburant (1), dont le carburant des moteurs est alimenté par une conduite de gavage (2, 4) par pompage vers un système de formation du mélange et le carburant excédentaire est évacué par commande par pression par une conduite de retour (6),
- dans le dispositif (24), de la chaleur d'évaporation conduite par un échangeur de chaleur (9) vers le carburant du moteur à combustion interne dévié en amont d'une soupape de maintien de la pression (7) venant de la conduite de retour (6), et
- le carburant légèrement ou, selon le cas, plus fortement chauffé du moteur à combustion interne affluant par une soupape de régulation (10) vers un séparateur de vapeurs (11) dont
- les vapeurs des constituants à bas point d'ébullition du carburant sont aspirées au moyen d'un compresseur (12) et conduits à un condensateur (13)
- relié par la conduite du condensat à un réservoir (14).

3. Moteur à combustion interne selon les revendications 1 et 2,
**caractérisé en ce que**
le réservoir du condensat (14) est raccordé par une conduite d'échappement (23) équipée d'une soupape de refoulement (22) au réservoir d'approvisionnement en carburant (1).

4. Moteur à combustion interne selon l'une des revendications 2 et 3,
**caractérisé en ce que**
le réservoir d'approvisionnement en carburant (1) est, d'un point élevé, par une conduite d'écoulement (18) commandée par une soupape, reliée côté aspiration à un compresseur (12).

5. Moteur à combustion interne selon la revendication 2,
**caractérisé en ce que**
le carburant rassemblé dans le séparateur de vapeurs (11) constitué de constituants peu volatils ou, selon le cas, à bas point d'ébullition est ramené par un échangeur de chaleur (20) refroidissant le carburant au réservoir d'approvisionnement en carburant (1).

6. Moteur à combustion interne selon l'une des revendications 1 à 5,
**caractérisé par**
- l'utilisation à bord d'un véhicule automobile,
- le condensat étant produit au moyen de la chaleur perdue à bord et étant stocké entre-temps dans le réservoir (14) pour le reformeur (17)
- en liaison d'effet avec la pile à combustible (21) configurée comme un dispositif auxiliaire comme source de courant/tension pour le réseau de bord.
